Europäisches Patentamt

European Patent Office

Office européen des brevets

(11) Publication number: **0 080 729**
**A1**

## (12) EUROPEAN PATENT APPLICATION

(21) Application number: **82111032.7**

(22) Date of filing: **30.11.82**

(51) Int. Cl.³: **C 08 J 5/12**
**B 29 C 27/02**
**//(C08J5/12, C08L27/18)**

(30) Priority: **01.12.81 CS 8882/81**

(43) Date of publication of application:
**08.06.83 Bulletin 83/23**

(84) Designated Contracting States:
**AT BE CH DE FR GB IT LI LU NL SE**

(71) Applicant: **SIGMA koncern**
**Trida Kosmonautu 6**
**Olomouc(CS)**

(72) Inventor: **Zapletal, Zdenek, Dipl.-Ing.**
**Tr. Svornosti 30**
**Olomouc(CS)**

(72) Inventor: **Konecná, Alena, Dr.**
**Pionyrská 22**
**Olomouc(CS)**

(72) Inventor: **Peterka, Milan, Dipl.-Ing.**
**Sokolovksá 262**
**Praha(CS)**

(72) Inventor: **Zapletal, Jan, Dipl.-Ing.**
**Tr. Svornosti 30**
**Olomouc(CS)**

(74) Representative: **Patentanwälte Beetz sen. - Beetz jun.**
**Timpe - Siegfried - Schmitt-Fumian**
**Steinsdorfstrasse 10**
**D-8000 München 22(DE)**

(54) **A process of joining plastics with high melt viscosities.**

(57) The invention concerns a process of joining plastics having high melt viscosities e.g. for producing sealing rings, especially for ball valves, from extruded semi-product. According to this process the ends of the semi-product to be connected are non-detachably connected by applying a temperature of 200 to 400°C and a pressure at least 0,1 MPa or optionally using a fusible connecting intermediate layer.

Fig.1

EP 0 080 729 A1

# A Process of Joining Plastics with High Melt
## Viscosities

The invention is related to a process of joining plastics and particularly those having high melt viscosities of more than 100 Pa s ($10^3$ P) such as pressed profiles on the basis of polytetrafluoroethylene for seats and sealing rings of ball valves of large inner diameters for use under high pressure, within a wide temperature range and in chemically and mechanically active environments.

Ball valves represent at present one of the most progressive types of shut-off armatures and are widely used, e.g. in the food industry, chemical and petrochemical industry and thermal and nuclear power plants. The quality and the technical standard of ball valves is determined by some technical and economical parameters, especially by the functional reliability, the minimum leakage in shut-off position and high service life. The value of these and many other parameters is in a direct relation to the level of the design and the method of manufacturing their main sealing, i.e. their sealing rings embedded in the seat rings of ball valves.

These sealing rings are hitherto manufactured e.g. by pressing of plastics; for the most critical purposes they are made for example of pure or filler containing polytetrafluoroethylene, followed by sintering and finally by machining. The drawback of this process                    lies in the fact that

233-S10157-SF-Bk

pressing needs special presses for moulding of plastics which are designed such that they exhibit the necessary pressing force as well as the required speed of the stroke of the working piston. Furthermore it is disadvantageous that for each size of sealing rings a separate pressing mould must be provided, which is expensive and costly. Therefore there is a need for unified facilities for the manufacture of sealing rings, especially for ball valves of maximum size, for example with inner diameters of 1000 mm and more, since such facilities for shut-off armatures beyond a certain dimensional limit are not included in the catalogue program of specialized press manufacturers.

Further drawbacks rest in the laborious machining, the high percentage of waste material, the deterioration of the mechanical properties including the abrasion resistance due to the separate pressing and sintering procedures as compared for example with the extrusion process. For producing sealing rings from extruded profiled semi-products it is already known to insert the semi-product into a groove of the seat ring, its free ends being superposed. However, this method is disadvantageous in that it is not suited for high pressures and temperatures due to the high thermal dilatation of plastics.

There is also known a process for welding profiled thermoplasts which are at first heated in a suitable manner and then their heated ends are pressed against one another in a suitably shaped welding form and thereafter are allowed to cool down. This process cannot be used for shaped articles made of polytetrafluoroethylene due to its substantially different properties as compared to thermoplasts, since e.g. the processing of polytetrafluoroethylenes is similar to the powder metallurgy. Also concerning welding polytetrafluoroethylenes differ from common thermoplasts e.g. by their high melt viscosity ($\sim 10^{13}$ Pa s,

$\sim 10^{14}$ P); accordingly this material is rather similar to ceramics while thermoplasts have substantially lower viscosities ($\sim$10 Pa s, $\sim 10^2$ P). Furthermore tetrafluoroethylenes show high dimensional changes at the transformation into the gel-like state as compared with thermoplasts.

It is an object of the invention to provide a process for joining plastics with high melt viscosities which is not affected with the above shortcomings and allows particularly joining of extruded polytetrafluoroethylene based profiles.

This problem is solved according to claim 1.

The process of joining plastics, particularly those having melt viscosities of more than 100 Pa s ($10^3$ P) such as extruded profiles on the basis of polytetrafluoroethylene, according to the invention is characterized by pressing the faces of the ends to be connected to one another, heating the joint to a temperature of 200 to 400 °C, whereby this temperature is maintained for at least 10 min and a pressure of at least 0,1 MPa is applied, and cooling the joint to a temperature below 150 °C and interrupting pressure.

The subclaims refer to preferred embodiments.

According to the invention it is preferable to apply the pressure in three axes.

The process of the invention can be used preferably for producing ring-shaped articles from extruded plastic profiles, particularly made of fluorinated polyethylenes and other fluorinated polymers, by coiling.

According to the general conception of the invention the faces of the ends to be connected are preferably cut perpendicularly or obliquely before connection.

The faces of the ends to be connected may also preferably be shaped into a lock before connection.

Other preferred embodiments of the invention concern the insertion of a foil of non-sintered polytetrafluoroethylene or a fusible fluoro polymer or copolymer between the faces of the ends to be connected before heating the joint.

According to another preferred embodiment of the invention a dispersion of non-sintered polytetrafluoroethylene or a fusible fluoro polymer or copolymer coated between the faces of the ends to be connected before heating the joint.

According to another preferred embodiment a powder of non-sintered polytetrafluoroethylene or a fusible fluoro polymer or copolymer is applied before heating the joint.

The higher effectivity of the process according to the present invention allows the highly productive manufacture of sealing rings designated for high sealing pressures and a wide range of operating temperatures without necessity of using specific and expensive machines and tools, with considerable savings of expensive, not recyclable materials. It is not necessary to provide specific pressing tools for individual diameters of seals and the exact diameters and cross-sections can be obtained without machining. Thus, seals of any diameter can be manufactured with only one facility, and without wastes. The mechanical properties of extruded semi-products and their abrasion resistance, which is of special importance within the operating conditions of ball shut-off valves are better than with pressed and freely sintered semi-products. The production of extruded semi-products requires less energy than the production of semi-products by pressing followed by sintering in chamber furnaces.

The present invention is schematically illustrated by way of example in the accompanying drawing with reference to a sealing ring of a fluorinated polymer.

Fig. 1 represents a front view of a sealing ring manufactured according to the present invention;

Fig. 2 is a cross-sectional view in the A-A plane of the sealing ring of Fig. 1;

Fig. 3 shows a detail B of the joint of the sealing ring of Fig. 1:

the Fig. 4 to 7 refer to alternative embodiments of joints of the sealing ring.

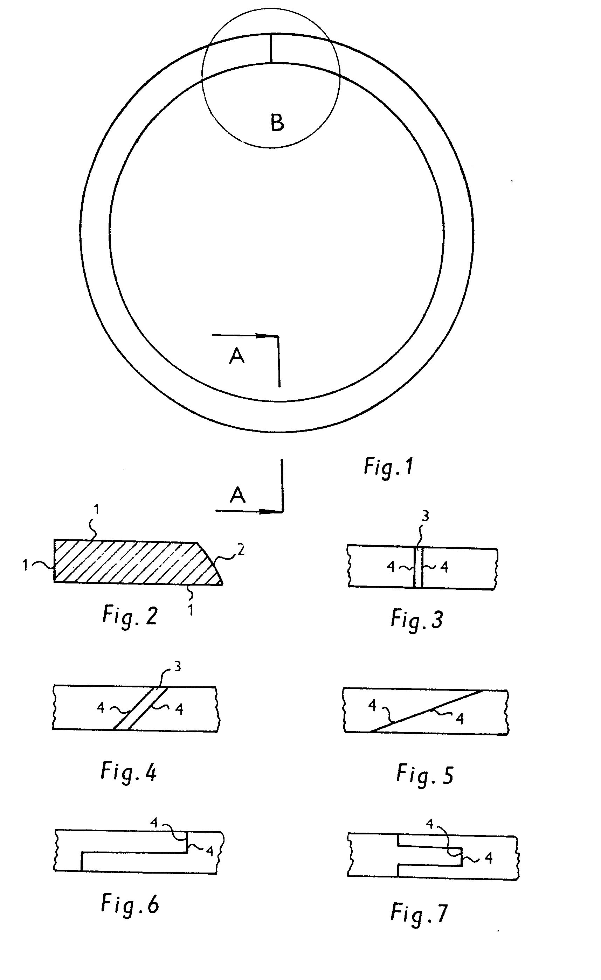

Usually, such sealing rings have essentially rectangular cross-sections; the three faces 1 are embedded in a groove (not shown) of a seat ring while the fourth, profiled face 2 forms the specific sealing face being in engagement with a spherical sealing face (not shown) of the shut-off element of the corresponding armature. The sealing ring is manufactured by coiling a profiled rod-like semi-product, the ends of which are connected to one another directly or by means of an intermediate layer 3 (fig. 3), either by sticking or by fusing with heating. The faces 4 of the ends of the semi-product to be connected are either straight cut as shown in figs. 1 and 2 or oblique by cut with any arbitrary angle of inclination of the cut as shown on figs. 4 and 5 or shaped into the form of a lock as shown in figs. 6 and 7.

The rod-like semi-product is manufactured such that a pure or filler containing polytetrafluoroethylene exhibiting sufficient fluidity of particles is brought into a fluid state by intermittend filling the working cavity of the extrusion machine and subsequent pressing and extrusion through the working cavity heated to the sintering temperature and is extruded into an infinite profiled rod having the required cross-section. The extruded semi-product is cooled either in the straight state or in a pre-formed state, i.e. when coiled, for example onto a drum being provided with circumferential grooves of a corresponding profile. In the next step the length needed for manufacturing the sealing ring is cut off from the cooled semi-product and its ends to be connected are treated such that the faces 4 to be connected are corresponding to one another. The shape of the faces 4 to be connected can be produced directly by cutting which results in minimum waste. This is followed by degreasing and cleaning of both the ends which are then connected to one another, for example by sticking. The sticking process can be carried out in such a manner that the ends to be connected are first slightly etched in alkaline complex compound, then are rinsed with water, dried and coated either by a phenolic, epoxy, rubbery or any other adhesive followed by pressing the faces 4 to be connected together and allowing the joint to harden under normal or elevated temperatures depending on the kind of adhesive used. Alternatively, the ends of the semi-product, which may contain a filler material, can be connected by a heat treatment similar to welding. When using the above process the faces to be connected are first pressed to one another; the joint is then heated to a temperature above the melting temperature of the crystalline regions of the fluorinated polymer, e.g. polytetrafluoroethylene, which is within the range of 327 to 400 °C; this temperature is maintained for the time needed for sintering of the polytetrafluoroethylene particles, which is usually 10 to 60 min, the joint being simultaneously under pressure along the three axes ranging between 0,1 and 10 MPa. In order to prevent the joint from distortion the above pressure is maintained after finishing the melting process to effect joining until the temperature is droped below 100 to 150 °C. The joint is then released; after cooling to normal temperature the sealing ring is ready to use. By connection especially filler containing polytetrafluoroethylenes without additional material in the above way only joints having a low strength can be obtained. It is therefore advantageous to use an additional material, e.g. non-sintered polytetrafluoroethylene, which is inserted between the faces to be connected before welding in the form of a foil, a dispersion or a powder. Hereby, the strength of the joint is increased substantially. A further increase in the strength of the joint can be reached by a process similar to brazing which is performed similarly to the above process with the exception that between the faces 4 to be connected a fusible fluoro polymer is inserted in the form of a foil, a dispersion or a powder, e.g. a polymer having a low molecular weight, perfluoropropylvinylether or a fluoro copolymer, e.g. a tetrafluoroethylene-hexafluoropropylene copolymer. The melt viscosities of these materials are much lower than that of polytetrafluoroethylenes which results also in better fluidity; the strength of the bonding of these materials to the surface of polytetrafluoroethylene and to the surface of a filler material is substantially better than that of polytetrafluoroethylene.

With this connecting method lower temperatures can be employed than in the previous case; however with consideration of the fact that low temperatures require longer retention times at the connecting temperature it is advantageous to use higher temperatures in order to shorten the process and to enhance the productivity. The applicable temperature range is between 200 and 400 °C depending on the kind of filler material used. Above a temperature of 327 °C melting of the parent material starts and the process of brazing transforms into a process similar to welding. In this case it is dealt with a combined process. The adhesive, foil, dispersion or powder used form at the finished sealing ring an intermediate connecting layer 3 as mentioned above. The thickness of this layer depends on the amount, form and kind of material of the intermediate layer 3 and is within the range of 0,01 to 1,00 mm, the optimum value being 0,1 mm. At the sticked connection usually 10 to 25 % of the strength of the extruded semi-product are obtained; the welded connecting without filler material yields 20 to 40 % of the strength of the extruded semi-product, whereas a welded connection with filler material yields 30 to 50 % of the strength of the extruded material, the brazed connection reaches 50 to 80 % of the strength of the extruded semi-product.

Under agressive conditions the strength of the sticked joint substantially decreases because of insufficient chemical resistance of adhesives used which leads to a substantial limitation of the applicability of this connecting method in the case of sealing rings made of polytetrafluoroethylene.

Sealing rings joined according to the present invention can be used for all purposes where closed sealing elements are used, especially for shut-off armatures such as e.g. ball valves, flaps and valves. They can also be used in other cases, e.g. for sealing of detachable joints of pipings. In all such cases it is advisable to dispose the region of connection of the sealing ring during its assembly at positions of minimal mechanical strain. For example with ball valves this region is in a plane determined by the axis of the flow direction of the valve and the axis of rotation of the sphere within a deviation of up to ± 30 °.

Claims

1. A process of joining plastics particularly having melt viscosities of more than 100 Pa s $(10^3 P)$ such as extruded profiles on the basis of polytetrafluoroethylene,

   c h a r a c t e r i z e d   b y

   - pressing the faces of the ends to be connected to one another,

   - heating the joint to a temperature of 200 to 400 °C, whereby this temperature is maintained for at least 10 min and a pressure of at least 0,1 MPa is applied, and

   - cooling the joint to a temperature below 150 °C and interrupting the pressure.

2. A process according to claim 1, characterized in that the pressure is applied in three axes.

3. A process according to claim 1 or 2, characterized in that the extruded profile is coiled to form a ring.

4. A process according to one of claims 1 to 3, characterized in that the faces of the ends to be connected are cut perpendicularly before connecting.

233-S10157-SF-Bk

5. A process according to one of claims 1 to 3, characterized in that the faces of the ends to be connected are cut obliquely before connecting.

6. A process according to one of claims 1 to 3, characterized in that the faces of the ends to be connected are formed into the shape of a lock before connecting.

7. A process according to one of claims 1 to 6, characterized in that a foil of non-sintered polytetrafluoroethylene is inserted between the faces of the ends to be connected before heating.

8. A process according to one of claims 1 to 6, characterized in that a foil of a fusible fluoro polymer is inserted between the faces of the ends to be connected before heating.

9. A process according to one of claims 1 to 6, characterized in that a foil of a fusible fluoro copolymer is inserted between the faces of the ends to be connected before heating.

10. A process according to one of claims 1 to 6, characterized in that the faces of the ends to be connected are coated with a dispersion of non-sintered polytetrafluoroethylene before heating.

11. A process according to one of claims 1 to 6, characterized in that the faces of the ends to be connected are coated with a dispersion of a fusible fluoro polymer before heating.

12. A process according to one of claims 1 to 6, characterized in that the faces of the ends to be connected are coated with a dispersion of a fusible fluoro copolymer before heating.

13. A process according to one of claims 1 to 6, characterized in that a powder of non-sintered polytetrafluoroethylene is applied onto the faces of the ends to be connected before heating.

14. A process according to one of claims 1 to 6, characterized in that a powder of a fusible fluoro polymer is applied onto the faces of the ends to be connected before heating.

15. A process according to one of claims 1 to 6, characterized in that a powder of a fusible fluoro copolymer is applied onto the faces of the ends to be connected before heating.

16. A process according to one of claims 1 to 15, characterized in that valve seats and sealing rings of ball valves are produced.

Fig.1

Fig. 2

Fig.3

Fig.4

Fig. 5

Fig.6

Fig.7

# EUROPEAN SEARCH REPORT

**European Patent Office**

0080729

Application number

EP 82 11 1032

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | GB-A-1 570 685 (HOECHST) <br><br> *Claims 1-7; page 1, lines 14-27; page 2, lines 24-79, lines 97-110* | 1,2,4- 9 | C 08 J 5/12 <br> B 29 C 27/02 // <br> (C 08 J 5/12 <br> C 08 L 27/18 ) |
| X | US-A-3 207 644 (C.H.HOBSON et al.) <br> *Claim; column 2, lines 4-52* | 1-4,16 | |
| A | GB-A-1 267 619 (AMERICAN CYANAMID) <br> *Claims 1,5,6; page 2, lines 20-41, lines 95-119* | 1,10- 15 | |
| A | GB-A-1 027 712 (BRT INDUSTRIES) <br> *Claims 1,3; page 2, lines 12-22* | 1,7,13 | **TECHNICAL FIELDS SEARCHED (Int. Cl. 3)** |
| A | FR-A-2 163 420 (STEIGER ENGINEERING) <br> *Page 1; page 2, lines 1-28* | 1,7,10 ,13 | C 08 J <br> B 29 C |
| A | GB-A- 774 929 (PERCY WILLS et al.) <br> *Claims 1-5; page 2, lines 32-59; figure 1* | 1-4,16 | |
| A | FR-A-1 221 831 (J.GACHOT) <br> *Abstract 1,2; page 2, lines 16-27* | 1 | |

The present search report has been drawn up for all claims

| Place of search | Date of completion of the search | Examiner |
|---|---|---|
| THE HAGUE | 18-03-1983 | HALLEMEESCH A.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82